# EUROPEAN PATENT SPECIFICATION

(11) **EP 4 012 544 B1**
(45) Date of publication and mention of the grant of the patent: **09.10.2024**
(21) Application number: 20859179.2
(22) Date of filing: 10.08.2020
(51) Int. Cl.: G06F 3/04886, G06F 3/04817, G06F 3/0482, G06F 3/0486, G06F 3/04883, G06F 3/0481, H04M 1/72472

(54) **SPLIT-SCREEN PROCESSING METHOD AND TERMINAL DEVICE**
VERFAHREN UND VORRICHTUNG ZUR SPALTBILDSCHIRMVERARBEITUNG
PROCÉDÉ DE TRAITEMENT D'ÉCRAN PARTAGÉ ET DISPOSITIF TERMINAL

(30) Priority: 26.08.2019 CN 201910792222
(43) Date of publication of application: 15.06.2022
(73) Proprietor: Huawei Technologies Co., Ltd., Longgang District Shenzhen, Guangdong 518129 (CN)
(72) Inventor: ZHU, Jinpeng, Shenzhen, Guangdong 518129 (CN); REN, Wenjie, Shenzhen, Guangdong 518129 (CN); ZHAO, Junmin, Shenzhen, Guangdong 518129 (CN)
(74) Representative: Goddar, Heinz J.
(86) International application number: PCT/CN2020/108123
(87) International publication number: WO 2021/036770

(56) References cited:
- CN-A- 108 804 004
- CN-A- 109 766 053
- CN-A- 109 814 766
- CN-A- 110 633 043
- US-A1- 2013 120 295
- US-A1- 2013 305 184
- US-A1- 2013 332 881
- US-A1- 2014 009 415
- US-A1- 2014 229 888
- US-A1- 2015 007 066
- US-A1- 2021 342 045

## Description

This application claims priority to Chinese Patent Application No. 201910792222.4, filed with the China National Intellectual Property Administration on August 26, 2019 and entitled "SPLIT-SCREEN PROCESSING METHOD AND TERMINAL DEVICE".

### TECHNICAL FIELD

Embodiments of the present invention relate to the field of terminal technologies, and in particular, to a split-screen processing method, a terminal device and a computer storage medium.

### BACKGROUND

Currently, a terminal device may simultaneously run a plurality of applications (application) in the background, and a user may switch between different applications based on a requirement, to enter an interface on which the user wants to perform an operation.

To pursue better use experience, the user expects to divide a display screen of the terminal device into a plurality of subscreens. Different subscreens may present content of different applications, and the content on different subscreens does not affect each other. For example, when the user is watching a video, the user wants to handle other things at the same time, for example, editing an SMS message or processing instant messaging information, without interrupting the video.

For the current urgent requirement of the user for dividing one display screen into a plurality of subscreens, it is necessary to propose a corresponding technical solution, to conveniently and quickly present a plurality of subscreens on a display screen of a terminal device.

US 2014/0229888 A1 provides a mobile terminal including a display unit to which multiple divisional screen regions are output, and a control unit that when an input for entering a division mode in which the display unit is divided into the multiple screen regions is received, generates a list region including a list of multiple applications, divides the display unit into first and second screen regions with the list region in between, and executes first and second applications selected from among the multiple applications on the first and second screen regions, respectively, in which the controller executes an application selected from among the multiple applications included in the list on the list region, and in which when an object included in the application being executed on the list region is selected, at least one of the first and second applications uses the selected object.
US 2013/0120295 A1 provides a mobile device for executing multiple applications. The mobile device includes a touch screen for displaying a first window where a first application is executed, a second window where a second application different from the first application is executed, and a controller for displaying an execution keys for executing the multiple applications, determining whether a simultaneous execution input for the first application and the second application is input or not, and if the simultaneous execution input is input then displaying the first application on the first window and the second application on the second window.
US 2013/0332881 A1 discloses a method of supporting divided screen areas and a mobile terminal employing the same. The method includes: generating input signals for one of sequentially and simultaneously activating a plurality of user functions; activating the user functions according to generated input signals; dividing a screen into divided screen areas that correspond to activated user functions; and outputting functional view areas associated with the activated user functions to the corresponding divided screen area
US 2013/305184 A1 discloses: A multiple window apparatus and method is provided. A method of displaying a plurality of display windows on a screen by using a device, the method includes displaying a first display window on the screen, receiving a user input that selects an object included in the first display window. displaying a list of applications matching a display mode of the first display window in response to the user input, and displaying a second display window including an execution result of an application selected from the list in the display mode.

### SUMMARY

Embodiments of the present invention disclose a split-screen processing method, a terminal device and a computer storage medium, so as to quickly divide a display screen into a plurality of subscreens, and display different content on different subscreens.

A first aspect discloses a split-screen processing method according to claim 1.

In addition, because the user may implement screen splitting by performing an operation on an application in the application list, the user can implement, as required, screen splitting for an application that needs to be displayed, and the user does not need to open, after screen splitting, the application that needs to be used. This not only provides a flexible application startup and screen splitting manner, but also improves user experience. In addition, because the preset icon is displayed in a floating manner, display of the icon does not affect use of the terminal device by the user.

In a possible implementation, the first application list may include one or more of an application whose quantity of times of use is greater than a first threshold, an application whose association degree with a currently displayed application is greater than a third threshold, an application with to-be-processed information, and a recently used application, where a time difference between a time of using the application and a current time is less than a second threshold. It can be learned that the displayed application list is a list of applications determined based on a historical record of using an application by the user, whether to-be-processed information exists, and a degree of association with a current application. There is a relatively high probability that these applications are applications that the user needs to use, so that the user can quickly find a to-be-used application for screen splitting, and a screen splitting speed can be improved.

In a possible implementation, the first user operation may include a tap operation or a double-tap operation.

In a possible implementation, the terminal device displays to-be-selected applications when detecting an input third user operation on the first application list; when detecting an input fourth user operation on a second application, the terminal device adds the second application to the first application list to obtain a second application list; and the terminal device detects an input second user operation on the first application in the second application list. The to-be-selected applications are applications, in applications of the terminal device, other than the applications included in the first application list. The second application is any one of the to-be-selected applications. It can be learned that after the application list is determined based on the historical record of using the application by the user, whether to-be-processed information exists, and the degree of association with the current application, when an application required by the user is not in the list, the user may further add the required application to the application list, so as to perform screen splitting by using the application. The application may be started during screen splitting, which not only improves application startup efficiency, but also improves user experience.

In a possible implementation, the third user operation and the fourth user operation each may include a tap operation or a double-tap operation.

In a possible implementation, the terminal device hides the preset icon when detecting no input user operation on the preset icon within a preset time period. After a period in which the user does not use the preset icon reaches a specific time, the icon may be hidden, so as to reduce power consumption of the terminal device.

In a possible implementation, the terminal device displays the preset icon when detecting an input fifth user operation. It can be learned that when the user wants to use the icon, the user may perform an operation to display the icon. This can improve flexibility of the icon.

In a possible implementation, the fifth user operation may include a swipe operation.

In a possible implementation, the sixth user operation may include a tap operation, a double-tap operation, or a swipe operation.

In a possible implementation, when detecting an input seventh user operation on the first subscreen, the terminal device determines that the first subscreen is in a dragged state, and when detecting an input operation used to drag the first subscreen to an area of the second subscreen, the terminal device switches display positions of the first subscreen and the second subscreen. It can be learned that switching between the subscreens may be implemented by dragging the subscreens, so as to improve flexibility of switching between the subscreens.

In a possible implementation, the terminal device displays a split-screen thumbnail when detecting an input eighth user operation on the preset icon; and when detecting an input seventh user operation on a thumbnail corresponding to the first subscreen in the split-screen thumbnail, the terminal device determines that the first subscreen is in a dragged state. The terminal device switches display positions of the first subscreen and the second subscreen when detecting an input operation that is used to drag the thumbnail corresponding to the first subscreen to an area of a thumbnail corresponding to the second subscreen. It can be learned that switching between subscreens may be implemented by using a thumbnail. This can reduce an operation area of the user and improve user experience.

In a possible implementation, the seventh user operation may include an operation with a touch time greater than a fourth threshold, or an operation of double-tap with a touch time greater than a fourth threshold.

In a possible implementation, when detecting an input ninth user operation on the first subscreen, the terminal device determines that the first subscreen is in a dragged state; and the terminal device closes the first subscreen when detecting an input operation used to drag the first subscreen out of the screen. A subscreen and a corresponding application may be directly closed by dragging the subscreen, so that the subscreen and the corresponding application can be conveniently and quickly closed without affecting use of another application.

In a possible implementation, the terminal device displays the split-screen thumbnail when detecting an input tenth user operation on the preset icon, and the terminal device closes the first subscreen when detecting an input eleventh user operation on the thumbnail corresponding to the first subscreen in the split-screen thumbnail. It can be learned that a subscreen and a corresponding application may be closed by using a thumbnail, so that the subscreen and the corresponding application can be conveniently and quickly closed without affecting use of another application.

In a possible implementation, the eleventh user operation may be a tap operation, or may be an operation with a touch time greater than a fifth threshold.

A second aspect discloses a terminal device according to claim 12.

A third aspect discloses a computer storage medium according to claim 13.

### BRIEF DESCRIPTION OF DRAWINGS

FIG. 1 is a schematic diagram of a structure of a terminal device according to an embodiment of the present invention;
FIG. 2 is a block diagram of a software structure of a terminal device according to an embodiment of the present invention;
FIG. 3 is a schematic flowchart of a split-screen processing method according to an embodiment of the present invention;
FIG. 4 is a schematic diagram of displaying a preset icon by a terminal device according to an embodiment of the present invention;
FIG. 5 is a schematic diagram of adjusting a display position of a preset icon according to an embodiment of the present invention;
FIG. 6 is a schematic diagram of adjusting a shape of a preset icon according to an embodiment of the present invention;
FIG. 7 is a schematic diagram of adjusting a size of a preset icon according to an embodiment of the present invention;
FIG. 8 is a schematic diagram of a user operation used to display a preset icon according to an embodiment of the present invention;
FIG. 9 is a schematic diagram of displaying an application list after a user taps a preset icon according to an embodiment of the present invention;
FIG. 10 is another schematic diagram of displaying an application list after a user taps a preset icon according to an embodiment of the present invention;
FIG. 11 is a schematic diagram of adding an application to a first application list by a user by using a selection button or a selection area according to an embodiment of the present invention;
FIG. 12 is a schematic diagram of performing a user operation on an application in a first application list to implement screen splitting according to an embodiment of the present invention;
FIG. 13 is another schematic diagram of performing a user operation on an application in a first application list to implement screen splitting according to an embodiment of the present invention;
FIG. 14 is still another schematic diagram of performing a user operation on an application in a first application list to implement screen splitting according to an embodiment not covered by the claims;
FIG. 15 is still another schematic diagram of performing a user operation on an application in a first application list to implement screen splitting according to an embodiment not covered by the claims;
FIG. 16 is a schematic diagram of performing a user operation on a first application in a first application list to cover a first interface according to an embodiment not covered by the claims;
FIG. 17 is still another schematic diagram of performing a user operation on an application in a first application list to implement screen splitting according to an embodiment of the present invention;
FIG. 18 is a schematic diagram of subscreen switching according to an embodiment of the present invention;
FIG. 19 is another schematic diagram of subscreen switching according to an embodiment of the present invention;
FIG. 20 is still another schematic diagram of subscreen switching according to an embodiment of the present invention;
FIG. 21 is a schematic diagram of closing a subscreen according to an embodiment of the present invention; and
FIG. 22 is another schematic diagram of closing a subscreen according to an embodiment of the present invention.

### DESCRIPTION OF EMBODIMENTS

The embodiments of the present invention disclose a split-screen processing method and a terminal device, to quickly divide a display screen into a plurality of subscreens, and display different content on different subscreens. Details are separately described in the following.

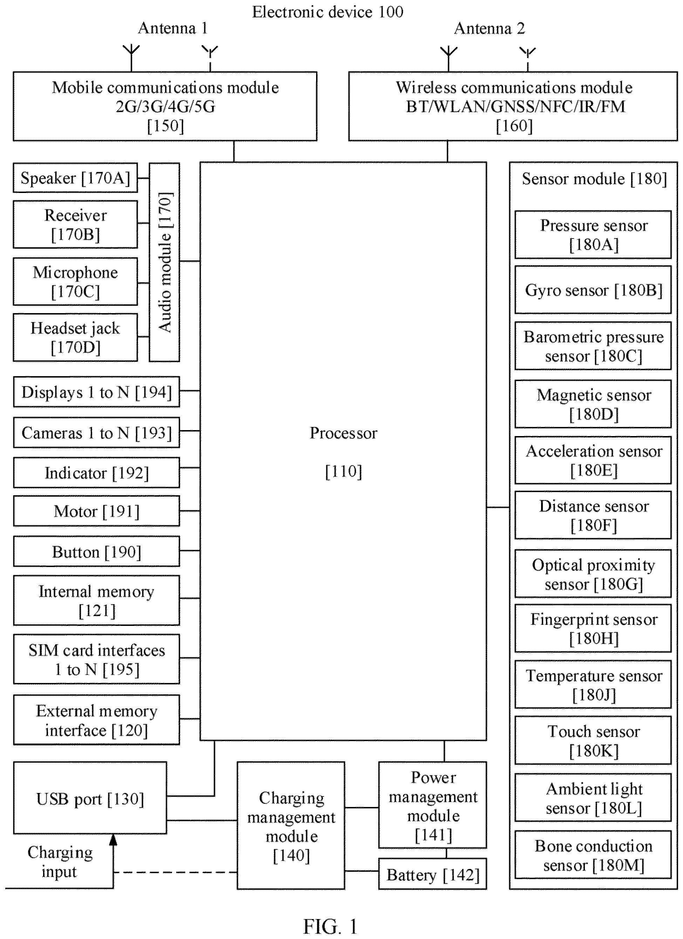

FIG. 1 is a schematic diagram of a structure of a terminal device according to an embodiment of the present invention. The terminal device 100 is used as an example below to describe the embodiments in detail. It should be understood that the terminal device 100 may have more or fewer components than those shown in the figure, or may combine two or more components, or may have different component configurations. Various components shown in the figure may be implemented in hardware that includes one or more signal processing and/or application-specific integrated circuits, software, or a combination of hardware and software.

As shown in FIG. 1, the terminal device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of the present invention, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be standalone devices, or may be integrated into one or more processors.

The controller may be a nerve center and a command center of the terminal device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K by using an I2C interface, so that the processor 110 communicates with the touch sensor 180K by using the I2C bus interface to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be configured to: perform audio communication, and sample, quantize, and encode an analog signal. In some embodiments, the audio module 170 may be coupled to the wireless communications module 160 through a PCM bus interface. In some embodiments, the audio module 170 may alternatively transfer an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus switches to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface to implement a photographing function of the terminal device 100. The processor 110 communicates with the display 194 by using the DSI interface, to implement a display function of the terminal device 100.

The GPIO interface may be configured through software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB Type C port, or the like. The USB port 130 may be configured to connect to the charger to charge the terminal device 100, or may be configured to transmit data between the terminal device 100 and a peripheral device, or may be configured to connect to a headset to play audio by using the headset. This interface may further be configured to connect to another terminal device, for example, an augmented reality (augmented reality, AR) device.

It may be understood that the interface connection relationship between modules shown in this embodiment of the present invention is merely an example for description, and does not constitute a structural limitation on the terminal device 100. In some other embodiments of the present invention, the terminal device 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments in which wired charging is used, the charging management module 140 may receive charging input from the wired charger through the USB port 130. In some wireless charging embodiments, the charging management module 140 may receive wireless charging input by using a wireless charging coil of the terminal device 100. When charging the battery 142, the charging management module 140 may further supply power to the terminal device by using the power management module 141.

The power management module 141 is configured to connect the battery 142 and the charging management module 140 to the processor 110. The power management module 141 receives input of the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the terminal device 100 may be configured to cover a single or more communication bands. Different antennas may be further multiplexed, to increase antenna utilization. For example, the antenna 1 may be multiplexed as a diversity antenna in a wireless local area network. In some other embodiments, the antenna may be used in combination with a tuning switch.

The mobile communications module 150 may provide a wireless communications solution applied to the terminal device 100, including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in the same device as the mobile communications module 150 or another function module.

The wireless communications module 160 may provide wireless communication solutions applicable to the terminal device 100, such as a wireless local area network (wireless local area networks , WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more components integrating at least one communications processing module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 100 is coupled to the mobile communications module 150, and the antenna 2 thereof is coupled to the wireless communications module 160, so that the terminal device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light emitting diode (flex light-emitting diode, FLED), a mini-LED, a micro-LED, a micro-OLED, quantum dot light emitting diodes (quantum dot light emitting diodes, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier Transform on frequency energy.

The video codec is configured to compress or decompress a digital video. The terminal device 100 may support one or more types of video codecs. In this way, the terminal device 100 may play or record videos in a plurality of coding formats, for example, Moving Picture Experts Group (moving picture experts group, MPEG) 1, MPEG2, MPEG3, MPEG4, and the like.

The NPU is a neural-network (neural-network, NN) computing processor. The NPU quickly processes input information by referring to a structure of a biological neural network, for example, a transfer mode between human brain neurons, and may further continuously perform self-learning. The NPU may be used to implement intelligent cognition of the terminal device 100 and other applications, for example, image recognition, facial recognition, speech recognition, and text understanding.

The external memory interface 120 may be configured to connect to an external storage card, for example, a micro SD card, to extend a storage capability of the terminal device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the terminal device 100. In addition, the internal memory 121 may include a high-speed random access memory, or may include a nonvolatile memory, for example, at least one magnetic disk storage device, a flash memory, or a universal flash storage (universal flash storage, UFS).

The terminal device 100 may implement an audio function through the audio module 170, the speaker 170A, the receiver 170B, the microphone 170C, the headset jack 170D, the application processor, and the like, for example, implement a music playback function and a recording function.

The audio module 170 is configured to convert digital audio information into an analog audio signal output, and is also configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The terminal device 100 may be used to listen to music or listen to a hands-free call by using the speaker 170A.

The receiver 170B, also referred to as an "earpiece", is configured to convert an audio electrical signal into a sound signal. When the terminal device 100 is used to answer a call or listen to voice information, a voice may be listened to by placing the receiver 170B close to a human ear.

The microphone 170C, also referred to as a "mike" or a "microphone", is configured to convert a sound signal into an electrical signal. When making a call or sending voice information, a user may make a sound by moving a human mouth close to the microphone 170C to input a sound signal to the microphone 170C. At least one microphone 170C may be disposed in the terminal device 100. In some other embodiments, two microphones 170C may be disposed in the terminal device 100. In addition to collecting a sound signal, the microphones may further implement a noise reduction function. In some other embodiments, three, four, or more microphones 170C may be disposed in the terminal device 100, to collect a sound signal, reduce noise, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. In some optional embodiments of the present invention, the pressure sensor 180A may be configured to: capture a pressure value generated when a finger part of the user contacts the display, and transmit the pressure value to the processor, so that the processor identifies a finger part through which the user enters the user operation.

There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects strength of the touch operation based on the pressure sensor 180A. The terminal device 100 may further calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed. In some optional embodiments of the present invention, the pressure sensor 180A may transmit a detected capacitance value to the processor, so that the processor identifies a finger part (a knuckle, a finger pad, or the like) through which the user enters a user operation. In some optional embodiments of the present invention, the pressure sensor 180A may further calculate a quantity of touch points based on a detected signal, and transmit a calculated value to the processor, so that the processor identifies that the user enters a user operation through a single finger or a plurality of fingers.

The gyro sensor 180B may be configured to determine a motion posture of the terminal device 100. In some embodiments, angular velocities of the terminal device 100 around three axes (that is, x, y, and z axes) may be determined by using the gyro sensor 180B. The gyro sensor 180B may be configured to perform image stabilization during photographing. For example, when the shutter is opened, the gyro sensor 180B detects a shake angle of the terminal device 100, calculates, based on the angle, a distance that needs to be compensated by a lens module, and enables the lens to counteract the shake of the terminal device 100 by performing reverse motion, thereby implementing image stabilization. The gyro sensor 180B may be further used in a navigation scenario and a motion-sensing game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall effect sensor. The terminal device 100 may detect opening and closing of a flip cover by using the magnetic sensor 180D. In some embodiments, when the terminal device 100 is a flip phone, the terminal device 100 can detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the terminal device 100 in various directions (generally three-axis). A magnitude and a direction of gravity may be detected when the terminal device 100 is stationary. The acceleration sensor may be further configured to identify a posture of the terminal device, and is used in an application such as switching between a landscape mode and a portrait mode or a pedometer. In some optional embodiments of the present invention, the acceleration sensor 180E may be configured to: capture an acceleration value generated when a finger part of the user contacts the display, and transmit the acceleration value to the processor, so that the processor identifies a finger part through which the user enters the user operation.

The distance sensor 180F is configured to measure a distance. The terminal device 100 may measure a distance by using infrared light or a laser. In some embodiments, in a photographing scenario, the terminal device 100 may measure a distance by using the distance sensor 180F, to implement fast focusing.

The optical proximity sensor 180G may include, for example, a light-emitting diode (LED) and an optical detector such as a photodiode. The light-emitting diode may be an infrared light-emitting diode. The terminal device 100 emits infrared light outwards by using the light-emitting diode. The terminal device 100 detects infrared reflected light from a nearby object by using the photodiode. When detecting plenty of reflected light, the terminal device 100 may determine that there is an object near the terminal device 100. When detecting inadequate reflected light, the terminal device 100 may determine that there is no object near the terminal device 100. The terminal device 100 may detect, by using the optical proximity sensor 180G, that the user holds the terminal device 100 close to the ear for a call, to automatically turn off the display to save power. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust luminance of the display 194 based on the sensed ambient light luminance. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the terminal device 100, and at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive button input, and generate button signal input related to user setting and function control of the terminal device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder scenario, an information receiving scenario, an alarm clock scenario, and a game scenario) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 can support a nano-SIM card, a micro-SIM card, a SIM card, and the like. A plurality of cards may be inserted into the same SIM card interface 195 at the same time. The plurality of cards may be of a same type or of different types. The SIM card interface 195 may also be compatible with different types of SIM cards. The SIM card interface 195 is also applicable to an external storage card. The terminal device 100 interacts with a network by using the SIM card, to implement functions such as a call and data communication. In some embodiments, the terminal device 100 uses an eSIM, that is, an embedded SIM card. The eSIM card may be embedded in the terminal device 100, and cannot be separated from the terminal device 100.

The following describes an implementation of the terminal device 100 related to the present invention. In the present invention, the terminal device 100 may be a portable terminal device such as a mobile phone, a tablet, a personal digital assistant (personal digital assistant, PDA), or a wearable device. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop (laptop) computer with a touch-sensitive surface (for example, a touch panel). It should be further understood that in some other embodiments of the present invention, the terminal device 100 may alternatively be a desktop computer with a touch-sensitive surface (for example, a touch panel), but not a portable terminal device.

In the present invention, the terminal device 100 is configured with a display screen, which may be configured to display interface content currently output by the terminal device system. The interface content may include an interface of a running application, a system-level menu, and the like, and may specifically include the following interface elements: input interface elements, for example, a button (button), a text (text) input box, a scroll bar (scroll Bar), a menu (menu), and the like, and output interface elements, for example, a window (window) and a label (label).

In the present invention, a touch panel is disposed on the display screen of the terminal device 100. In other words, the display screen is a touchscreen, and may be configured to receive a touch control operation performed by a user. The touch control operation is an operation that the user directly touches the display screen by using a body part, a stylus, or the like. In some optional embodiments, the touchscreen may be further configured to receive a floating touch operation of the user. The floating touch operation is an operation that a hand of the user is floated above the display screen but is not in contact with the display screen.

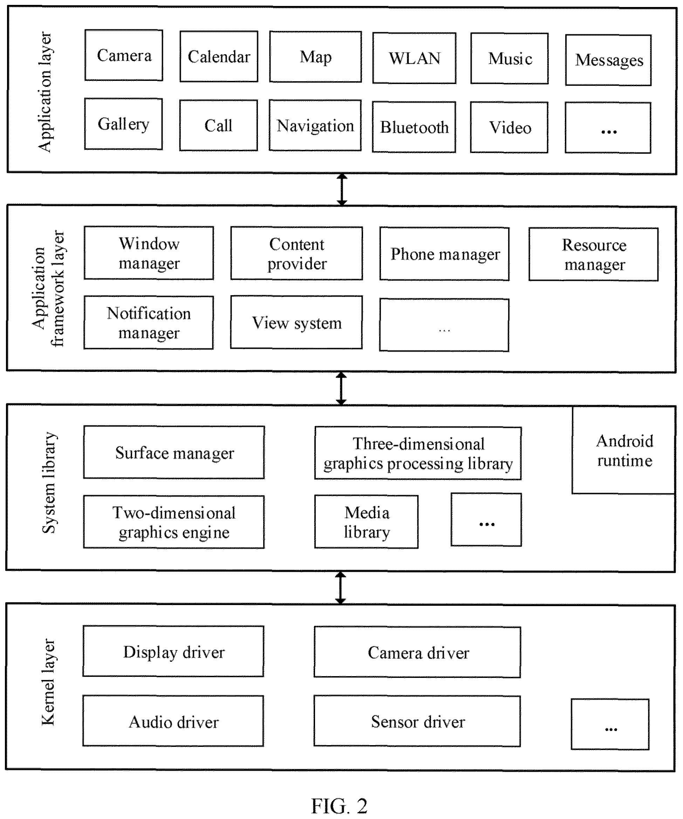

FIG. 2 is a block diagram of a software structure of a terminal device according to an embodiment of the present invention. In the layered architecture, software is divided into several layers, and each layer has a clear role and task. The layers communicate with each other through a software interface. In some embodiments, the Android system is divided into four layers, that is, an application layer, an application framework layer, an Android runtime (Android runtime) and system library, and a kernel layer from top to bottom. The application layer may include a series of application packages.

As shown in FIG. 2, the application packages may include applications (which may also be referred to as Apps) such as Camera, Gallery, Calendar, Call, Map, Navigation, WLAN, Bluetooth, Music, Video, and Messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the terminal device 100, for example, call status management (including call answering and hang up).

The resource manager provides various resources for an application such as a localized character string, an icon, a picture, a layout file, and a video file.

The notification manager enables an application to display notification information in a status bar, and may be configured to convey a notification type message, where the displayed notification information may automatically disappear after a short pause without user interaction. For example, the notification manager is configured to notify download completion, provide a message notification, and the like. The notification manager may alternatively be a notification that appears in a status bar on top of the system in a form of a chart or scroll bar texts, for example, a notification of an application running in the background, or a notification that appears on the screen in a form of a dialog interface. For example, text information is prompted in the status bar, a prompt tone is produced, the terminal device vibrates, or an indicator light blinks.

The Android runtime includes a kernel library and a virtual machine. The Android runtime schedules and manages the Android system.

The kernel library includes two parts: one part is a performance function that the Java language needs to invoke, and the other part is the Android kernel library.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, SGL), and the like.

The surface manager is configured to manage a display subsystem and provide fusion of 2D and 3D layers for a plurality of applications.

The media library supports playback and recording in a plurality of frequently used audio and video formats, static image file, and the like. The media library may support a plurality of audio and video coding formats, for example, MPEG4, H.264, MP3, AAC, AMR, JPG, PNG, and the like.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

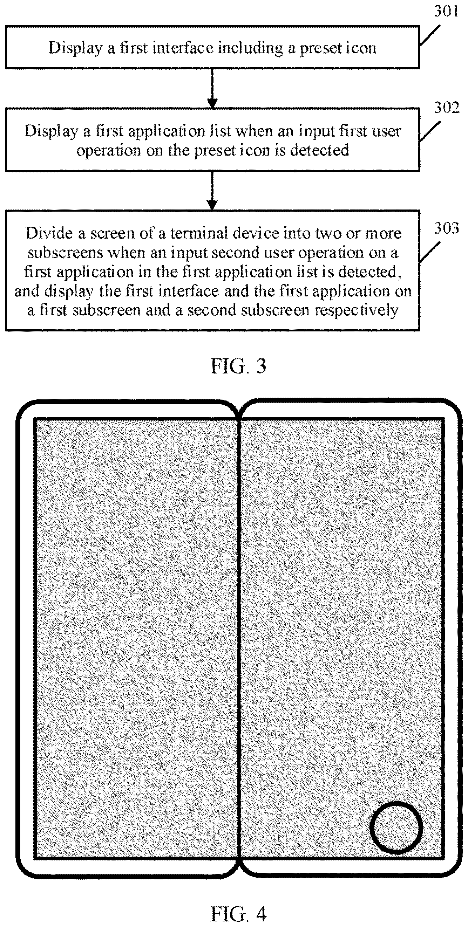

FIG. 3 is a schematic flowchart of a split-screen processing method according to an embodiment of the present invention. The split-screen processing method is applied to a terminal device. The terminal device may be a terminal device on which a foldable screen is disposed, or may be a terminal device on which a flat screen is disposed, or may be a terminal device on which a touchscreen is disposed in another manner. This is not limited herein. As shown in FIG. 3, the split-screen processing method may include the following steps.

301: Display a first interface including a preset icon.

The terminal device may display the first interface including the preset icon, and the preset icon is displayed in a floating manner, so that content currently displayed on a display screen is not affected. The first interface is an interface currently displayed by the terminal device, and may be a home screen interface, or may be an interface of any application.

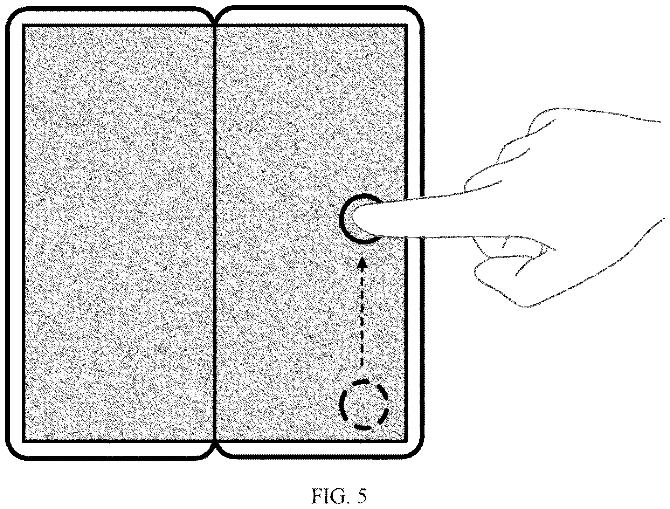

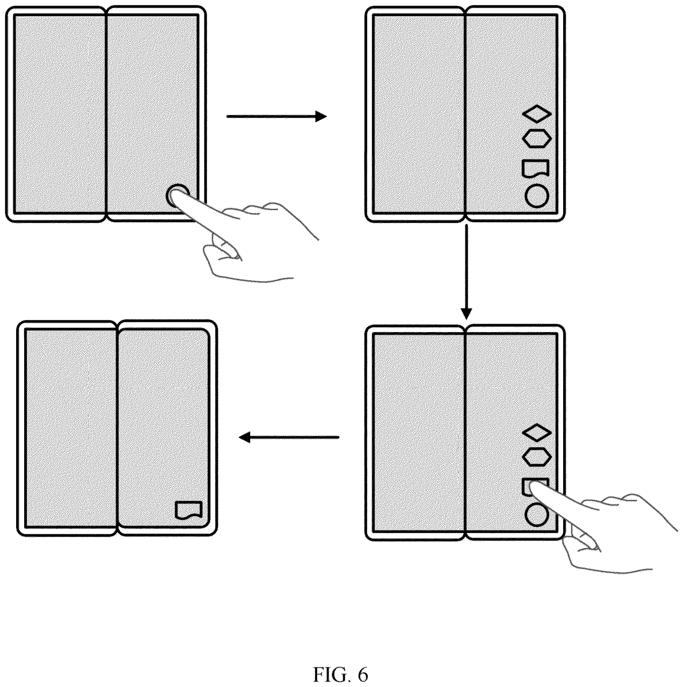

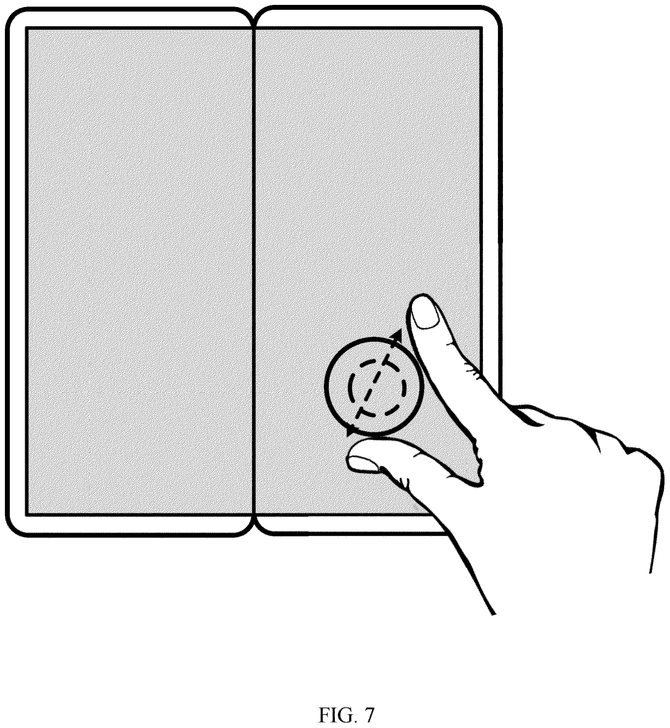

FIG. 4 is a schematic diagram of displaying a preset icon by a terminal device according to an embodiment of the present invention. As shown in FIG. 4, the preset icon may be a circular icon displayed in a lower right corner of the screen. FIG. 5 is a schematic diagram of adjusting a display position of a preset icon according to an embodiment of the present invention. As shown in FIG. 5, the dashed line represents the preset icon before adjustment, and the solid line represents the preset icon after adjustment. FIG. 6 is a schematic diagram of adjusting a shape of a preset icon according to an embodiment of the present invention. As shown in FIG. 6, a user may first perform an operation on the preset icon, for example, slide the current preset icon rightward. After detecting the operation, the terminal device may display an available preset icon. When the terminal device detects a tap operation performed by the user on a preset icon, the terminal device replaces the current preset icon with the preset icon that the user taps. FIG. 7 is a schematic diagram of adjusting a size of a preset icon according to an embodiment of the present invention. As shown in FIG. 7, the dashed line represents the preset icon before adjustment, and the solid line represents the preset icon after adjustment.

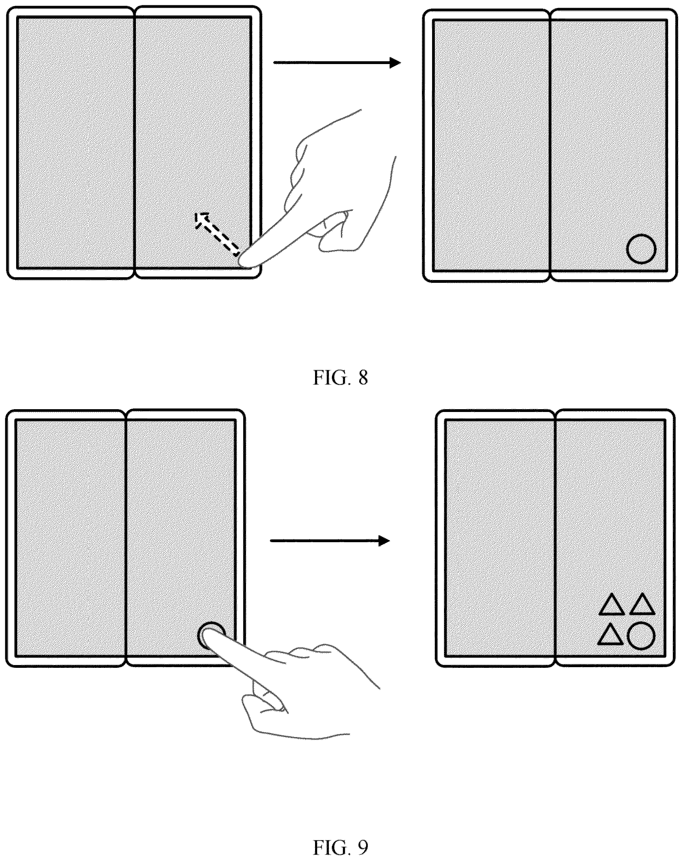

The preset icon may be displayed when the screen is unlocked, or may be displayed when the screen is lit. In some embodiments, if a foldable screen is disposed on the terminal device, when detecting that the foldable screen is unfolded, the terminal device displays the first interface including the preset icon. In other words, the preset icon may be displayed when the screen is unfolded. In some embodiments, when detecting an input fifth user operation, the terminal device displays the preset icon. The fifth user operation may be a swipe operation, or may be another touch operation, or may be a voice operation, or may be a gesture operation. FIG. 8 is a schematic diagram of a user operation used to display a preset icon according to an embodiment of the present invention. As shown in FIG. 8, the terminal device may display the preset icon when detecting a swipe operation, starting from a lower right corner in an upper left direction, performed by the user. Alternatively, the terminal device may display the preset icon when detecting a swipe operation, starting from a lower left corner in an upper right direction, performed by the user; or may display the preset icon when the terminal device detects another operation performed by the user.

When the terminal device detects no input user operation on the preset icon within a preset time period, the terminal device may hide the preset icon. In other words, when no operation performed by the user for the preset icon is detected within the period of time, it indicates that the user does not use the preset icon temporarily, and the preset icon may be automatically hidden, so as to reduce power consumption of the terminal device. Alternatively, the user may close the preset icon by performing an operation. For example, when detecting an operation of sliding, by the user, the preset icon to the lower right corner, the terminal device may close the preset icon.

302: Display a first application list when an input first user operation on the preset icon is detected.

After displaying the first interface including the preset icon, the terminal device may display the first application list when detecting the input first user operation on the preset icon. The first application list may include one or more of an application whose quantity of times of use is greater than a first threshold, an application whose association degree with a currently displayed application is greater than a third threshold, an application with to-be-processed information, and a recently used application, where a time difference between a time of using the application and a current time is less than a second threshold. The application whose quantity of times of use is greater than the first threshold is an application frequently used by the user, and may include only a frequently used split-screen application, or may include only a frequently used non-split-screen application, or may include a frequently used split-screen application and a frequently used non-split-screen application. The recently used application is an application recently used by the user, where a time difference between a time of using the application and a current time is less than the second threshold. The recently used application may include only a recently used split-screen application, or may include only a recently used non-split-screen application, or may include a recently used split-screen application and a recently used non-split-screen application. The application with to-be-processed information is an application that has an unprocessed new message.

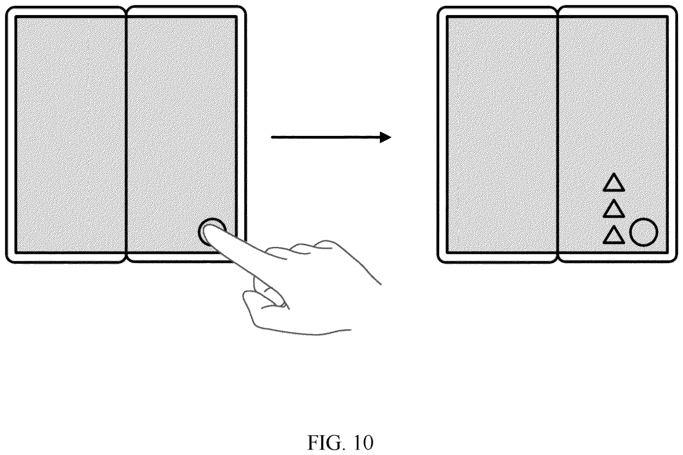

The first user operation may be a tap operation, or may be a double-tap operation, or may be another touch operation, or may be a voice operation, or may be a gesture operation. FIG. 9 is a schematic diagram of displaying an application list after a user taps a preset icon according to an embodiment of the present invention. As shown in FIG. 9, after detecting that the user taps the preset icon, the terminal device may display, around the preset icon, icons of applications in the application list, that is, triangles. One triangle represents one application icon. The figure shows icons of three applications. FIG. 10 is another schematic diagram of displaying an application list after a user taps a preset icon according to an embodiment of the present invention. As shown in FIG. 10, after detecting that the user taps the preset icon, the terminal device displays, next to the preset icon, icons of applications in the application list, and the icons of the applications are arranged in a column. The application list may be displayed in a floating manner, so that display of the currently displayed application is not affected. The application list may be displayed at a fixed location on the display screen or around the preset icon. The application list may be arranged in columns, rows, or other manners.

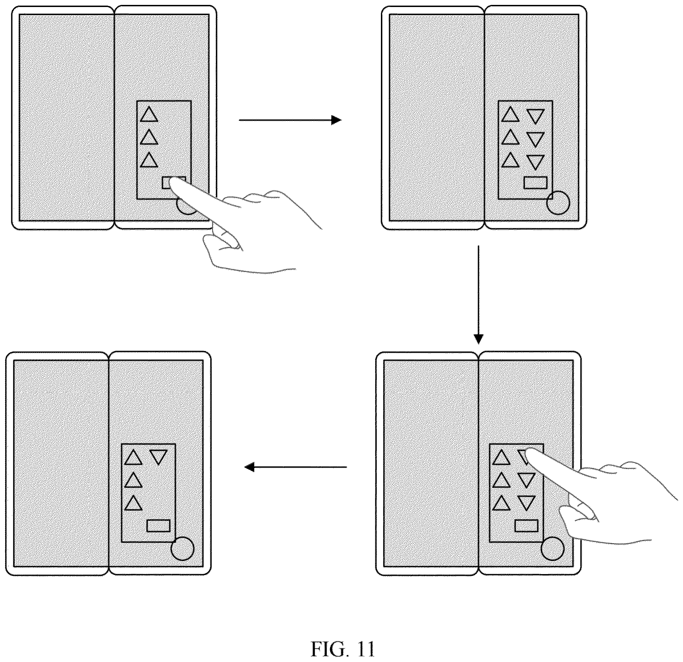

In an embodiment, when detecting an input third user operation on the first application list, the terminal device may display to-be-selected applications, and when detecting an input fourth user operation on a second application, the terminal device adds the second application to the first application list to obtain a second application list. The to-be-selected applications are applications, in applications of the terminal device, other than the applications included in the first application list, that is, applications that are not in the first application list. The second application is any one of the to-be-selected applications. The third user operation and the fourth user operation may be tap operations, or may be double-tap operations, or may be other touch operations, or may be voice operations, or may be gesture operations. The third user operation and the fourth user operation may be the same or different. It can be learned that the first application list may include a selection button or a selection area. When detecting an operation performed by the user on the selection button or the selection area, the terminal device may display the to-be-selected applications. When detecting an operation performed by the user on an application in the displayed to-be-selected applications, the terminal device may add the application to the first application list to obtain the second application list. FIG. 11 is a schematic diagram of adding an application to the first application list by the user by using a selection button or a selection area according to an embodiment of the present invention. As shown in FIG. 11, when detecting a tap operation performed by the user on the selection button or the selection area, the terminal device displays the to-be-selected applications. When detecting a tap operation performed by the user on an application in the to-be-selected applications, the terminal device adds the application to the first application list to obtain the second application list.

303: Divide the screen of the terminal device into two or more subscreens when an input second user operation on a first application in the first application list is detected, and display the first interface and the first application on a first subscreen and a second subscreen respectively.

After displaying the first application list, when detecting the input second user operation on the first application in the first application list, the terminal device may divide the screen of the terminal device into two or more subscreens, and display the first interface and the first application on the first subscreen and the second subscreen respectively. The first subscreen and the second subscreen are included in the two or more subscreens. The second user operation may be a tap operation, or may be a double-tap operation, or may be a swipe operation, or may be another touch operation, or may be a voice operation, or may be a gesture operation. In some embodiments, when the second application list is obtained from the first application list, the input second user operation detected by the terminal device is for the first application in the second application list.

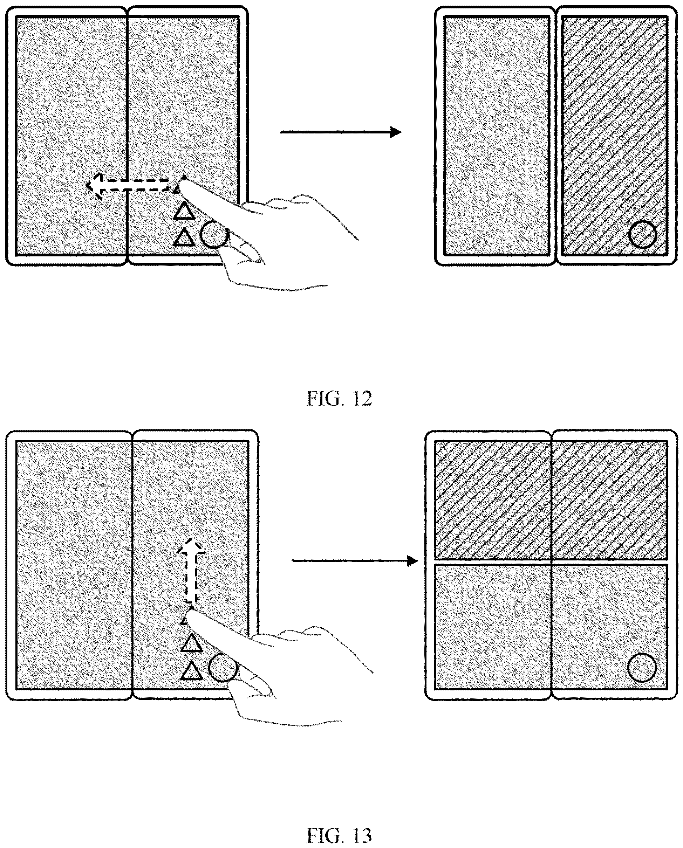

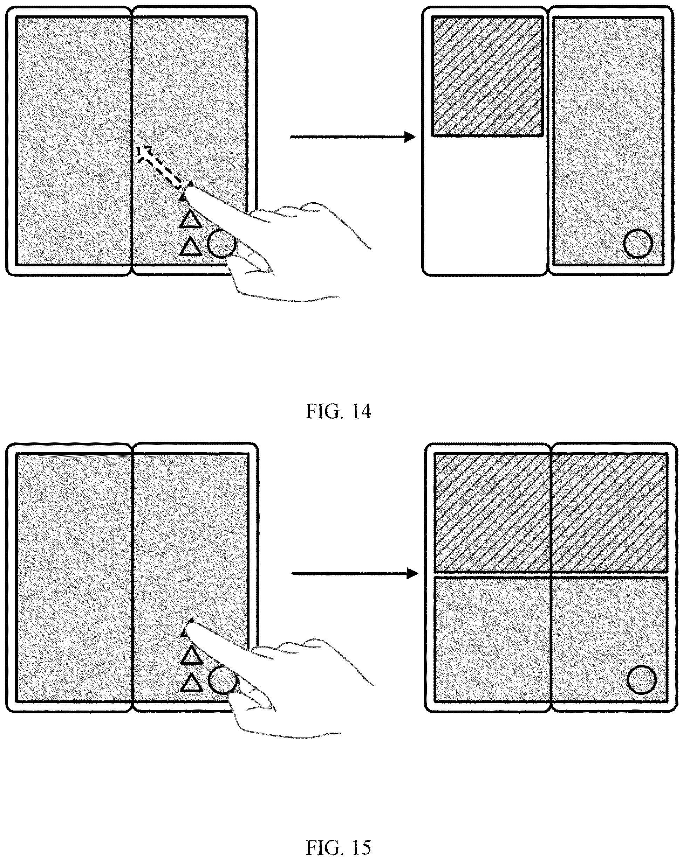

Different operations, detected by the terminal device, performed by the user on an application in the first application list may result in different responses of the terminal device. FIG. 12 is a schematic diagram of performing a user operation on an application in the first application list to implement screen splitting according to an embodiment of the present invention. As shown in FIG. 12, when the terminal device detects an operation, performed by the user, of touching and holding the first application in the first application list and sliding the first application to the left, the terminal device divides the display screen into two subscreens: a left subscreen and a right subscreen. The first interface may be displayed on the left subscreen, and the first application may be displayed on the right subscreen; or vice versa. FIG. 13 is another schematic diagram of performing a user operation on an application in the first application list to implement screen splitting according to an embodiment of the present invention. As shown in FIG. 13, when the terminal device detects an operation, performed by the user, of touching and holding the first application in the first application list and sliding the first application upwards, the terminal device divides the display screen into two subscreens: an upper subscreen and a lower subscreen. The first interface may be displayed on the upper subscreen, and the first application may be displayed on the lower subscreen; or vice versa. FIG. 14 is still another schematic diagram of performing a user operation on an application in the first application list to implement screen splitting according to an embodiment not covered by the claims. As shown in FIG. 14, when the terminal device detects an operation, performed by the user, of touching and holding the first application in the first application list and sliding the first application to the upper left, the terminal device may divide the display screen into two screens: a left 1/4 screen and a right full screen. The first interface may be displayed on the left 1/4 subscreen, and the first application may be displayed on the right subscreen; or vice versa.

FIG. 15 is still another schematic diagram of performing a user operation on an application in the first application list to implement screen splitting according to an embodiment not covered by the claims. As shown in FIG. 15, when the terminal device detects an operation, performed by the user, of tapping the first application in the first application list, the terminal device may divide the display screen into two subscreens: an upper subscreen and a lower subscreen. The first interface may be displayed on the upper subscreen, and the first application may be displayed on the lower subscreen; or vice versa.

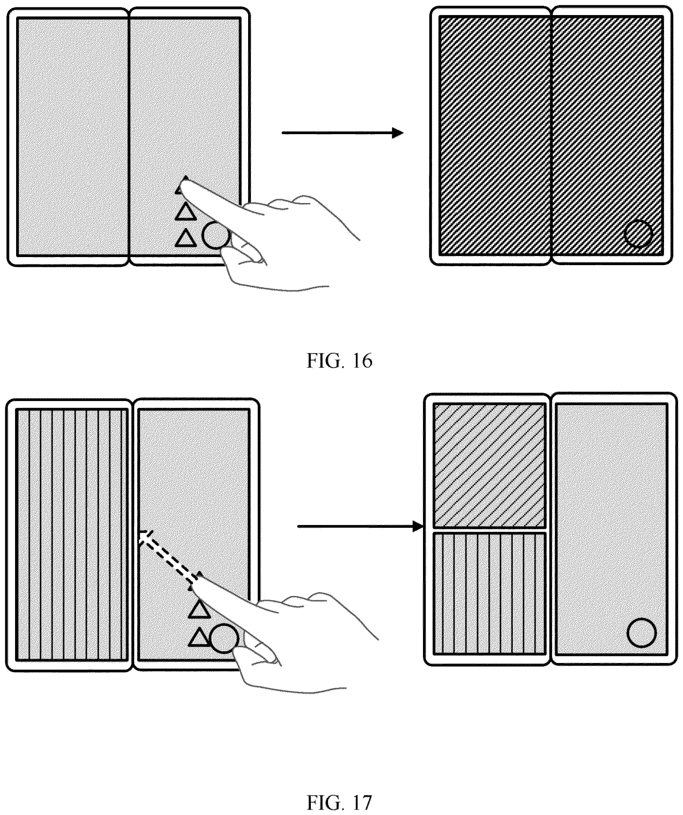

In some embodiments, when detecting an input sixth user operation on the first application in the first application list, the terminal device uses the first application to cover the currently displayed application. The sixth user operation may be a tap operation, or may be a double-tap operation, or may be a swipe operation, or may be another touch operation, or may be a voice operation, or may be a gesture operation. The second user operation is different from the sixth user operation. FIG. 16 is a schematic diagram of performing a user operation on the first application in the first application list to cover the first interface according to an embodiment not covered by the claims.

In an embodiment, when the terminal device is already in a screen split state, screen splitting may be performed again. FIG. 17 is still another schematic diagram of performing a user operation on an application in the first application list to implement screen splitting according to an embodiment of the present invention. As shown in FIG. 17, when the terminal device detects an operation, performed by the user, of touching and holding the first application in the first application list and sliding the first application to the upper left, the terminal device may further divide the left subscreen into two subscreens: an upper subscreen and a lower subscreen. An application originally displayed on the left subscreen may be displayed on the upper left subscreen, and the first application may be displayed on the lower left subscreen; or vice versa.

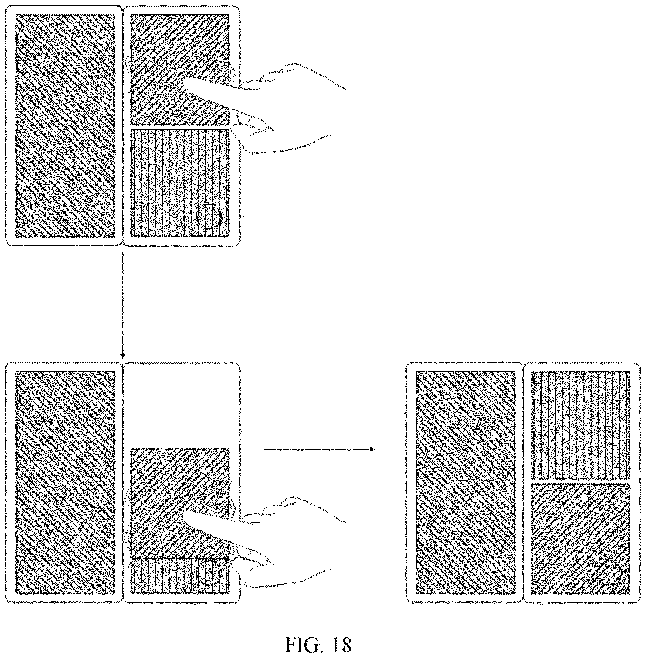

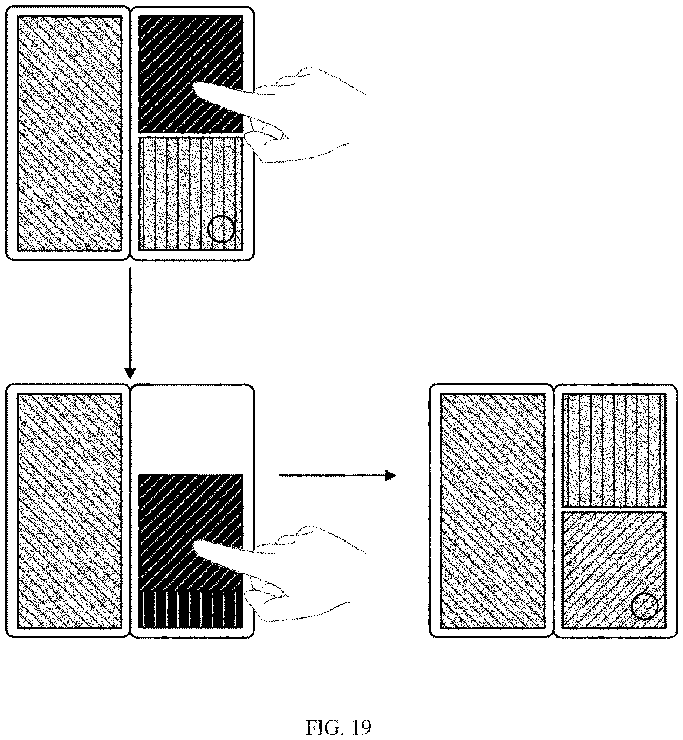

In some embodiments, after the screen of the terminal device is split, locations of different subscreens may be switched by using a user operation. In an implementation, when detecting an input seventh user operation on the first subscreen, the terminal device may determine that the first subscreen is in a dragged state, and when detecting an input operation used to drag the first subscreen to an area of the second subscreen, the terminal device switches display positions of the first subscreen and the second subscreen. When an area that is in the second subscreen and that is covered by the first subscreen is greater than a threshold, for example, 60% or 70% of the area of the second subscreen, it may be determined that the first subscreen is dragged to the area of the second subscreen. The seventh user operation may be an operation with a touch time greater than a fourth threshold, or may be an operation of double-tap with a touch time greater than a fourth threshold, or may be another touch operation, or may be a voice operation, or may be a gesture operation. FIG. 18 is a schematic diagram of subscreen switching according to an embodiment of the present invention. As shown in FIG. 18, when the terminal device detects a touch and hold operation performed by the user on the upper right subscreen, the upper right subscreen presents a floating and shaking state, indicating that the upper right subscreen enters a dragged state. When the terminal device detects a downward dragging operation performed by the user on the upper right subscreen in the dragged state, and the upper right subscreen enters an area of the lower right subscreen, it indicates that the lower right subscreen is a screen for switching, and the lower right subscreen may also present a floating and shaking state. After detecting that the user's finger leaves the screen, the terminal device may switch the display positions of the upper right subscreen and the lower right subscreen. FIG. 19 is another schematic diagram of subscreen switching according to an embodiment of the present invention. As shown in FIG. 19, when the terminal device detects a touch and hold operation performed by the user on the upper right subscreen, the upper right subscreen presents a specific color, indicating that the upper right subscreen enters a dragged state. When the terminal device detects a downward dragging operation performed by the user on the upper right subscreen in the dragged state, and the upper right subscreen enters an area of the lower right subscreen, it indicates that the lower right subscreen is a screen for switching, and the lower right subscreen also presents a specific color. After detecting that the user's finger leaves the screen, the terminal device may switch the display positions of the upper right subscreen and the lower right subscreen.

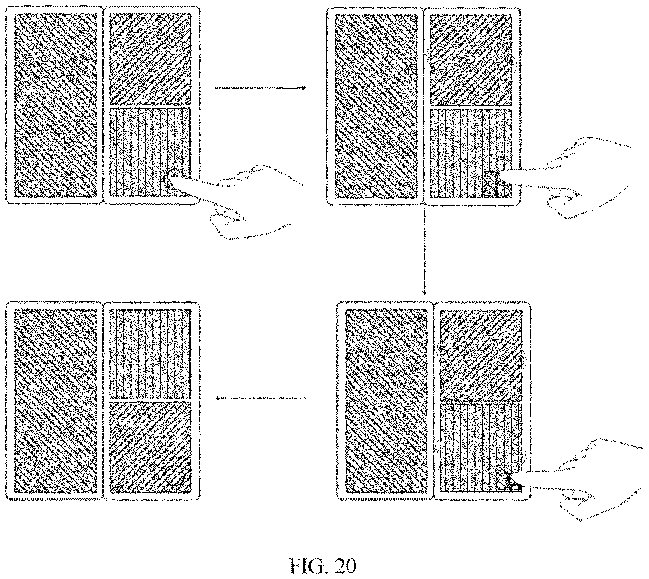

In another implementation, the terminal device displays a split-screen thumbnail when detecting an input eighth user operation on the preset icon; and when detecting an input seventh user operation on a thumbnail corresponding to the first subscreen in the split-screen thumbnail, the terminal device determines that the first subscreen is in a dragged state. The terminal device switches display positions of the first subscreen and the second subscreen when detecting an input operation that is used to drag the thumbnail corresponding to the first subscreen to an area of a thumbnail corresponding to the second subscreen. FIG. 20 is still another schematic diagram of subscreen switching according to an embodiment of the present invention. As shown in FIG. 20, the terminal device may display a split-screen thumbnail when detecting a double-tap operation performed by the user on the preset icon; and when detecting a touch and hold operation performed on a thumbnail corresponding to the upper right subscreen, the upper right subscreen presents a floating and shaking state, indicating that the upper right subscreen enters a dragged state. When it is detected that the user performs a downward dragging operation on the thumbnail corresponding to the upper right subscreen, and the upper right subscreen enters an area of the lower right subscreen, it indicates that the lower right subscreen is a screen for switching, and the lower right subscreen also presents a floating and shaking state. After detecting that the user's finger leaves the screen, the terminal device switches display positions of the upper right subscreen and the lower right subscreen.

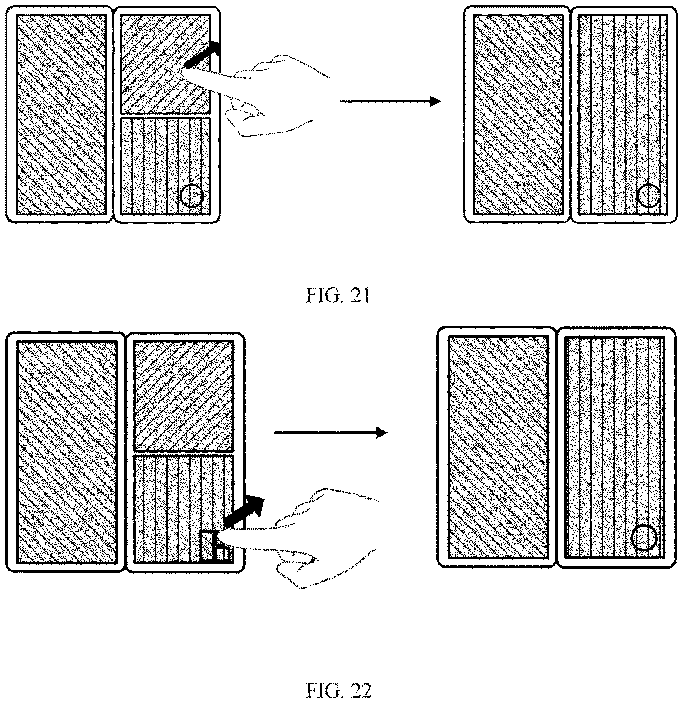

In some embodiments, after the terminal device splits the screen, any subscreen of the current split screen may be closed through a user operation. In an implementation, when detecting an input ninth user operation on the first subscreen, the terminal device determines that the first subscreen is in a dragged state; and the terminal device closes the first subscreen when detecting an input operation used to drag the first subscreen out of the screen. FIG. 21 is a schematic diagram of closing a subscreen according to an embodiment of the present invention. As shown in FIG. 21, when detecting a touch and hold operation performed by the user on the upper right subscreen, the terminal device may determine that the upper right subscreen enters a dragged state, and when detecting an operation, performed by the user, of dragging the upper right subscreen in the dragged state out of the screen, the terminal device closes the upper right subscreen, closes an application displayed on the upper right subscreen, and enlarges the lower right subscreen to occupy the position of the upper right subscreen.

In another implementation, the terminal device displays a split-screen thumbnail when detecting an input tenth user operation on the preset icon, and the terminal device closes the first subscreen when detecting an input eleventh user operation on a thumbnail corresponding to the first subscreen in the split-screen thumbnail. The eleventh user operation may be a tap operation, or may be an operation with a touch time greater than a fifth threshold, or may be another touch operation, or may be a voice operation, or may be a gesture operation. FIG. 22 is another schematic diagram of closing a subscreen according to an embodiment of the present invention. As shown in FIG. 22, when detecting a touch and hold operation performed by the user on a thumbnail corresponding to the upper right subscreen, the terminal device may determine that the upper right subscreen enters a dragged state; and when detecting an operation, performed by the user, of dragging the thumbnail corresponding to the upper right subscreen out of the screen, the terminal device closes the upper right subscreen, closes an application displayed on the upper right subscreen, and enlarges the lower right subscreen to occupy the position of the upper right subscreen.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention.

## Claims

1. A split-screen processing method comprising:
displaying (301), by a terminal device, a first interface comprising a preset icon and a first application, wherein the preset icon is displayed above the first application in a floating manner; and
displaying (302), by the terminal device, a first application list when detecting an input first user operation on the preset icon;
dividing (303), by the terminal device, a screen of the terminal device into two or more subscreens when detecting an input second user operation on a second application in the first application list; and
displaying, by the terminal device, the first application and the second application on a first subscreen and a second subscreen respectively, wherein the first subscreen and the second subscreen are comprised in the two or more subscreens;
**characterized in that**
when the input second user operation is an operation of touching and holding the second application in the first application list and sliding the second application to the left, the screen of the terminal is divided into a left subscreen and a right subscreen, the first subscreen being one subscreen among the left subscreen and the right subscreen and the second subscreen being the other subscreen among the left subscreen and the right subscreen, or
when the input second user operation is an operation of touching and holding the second application in the first application list and sliding the second application upwards, the screen of the terminal is divided into an upper subscreen and a lower subscreen, the first subscreen being one subscreen among the upper subscreen and the lower subscreen and the second subscreen being the other subscreen among the upper subscreen and the lower subscreen.

2. The method according to claim 1, wherein the first application list comprises one or more of an application whose quantity of times of use is greater than a first threshold, an application whose association degree with a currently displayed application is greater than a third threshold, an application with to-be-processed information, and a recently used application, wherein a time difference between a time of using the application and a current time is less than a second threshold.

3. The method according to claim 1 or 2, wherein the first user operation comprises a tap operation or a double-tap operation.

4. The method according to any one of claims 1 to 3, wherein the method further comprises:
displaying, by the terminal device, to-be-selected applications when detecting an input third user operation on the first application list, wherein the to-be-selected applications are applications, in applications of the terminal device, other than the applications comprised in the first application list;
when detecting an input fourth user operation on a fourth application, adding, by the terminal device, the fourth application to the first application list to obtain a second application list, wherein the fourth application is any one of the to-be-selected applications; and
the detecting, by the terminal device, an input second user operation on a second application in the first application list comprises:
detecting, by the terminal device, the input second user operation on the second application in the second application list.

5. The method according to any one of claims 1 to 4, wherein when a foldable screen is disposed on the terminal device, the method further comprises:
when detecting that the foldable screen is unfolded, displaying, by the terminal device, the first interface comprising the preset icon.

6. The method according to any one of claims 1 to 5, wherein the method further comprises:
hiding, by the terminal device, the preset icon when detecting no input user operation on the preset icon within a preset time period.

7. The method according to any one of claims 1 to 6, wherein the method further comprises:
displaying, by the terminal device, the preset icon when detecting an input fifth user operation.

8. The method according to any one of claims 1 to 7, wherein the method further comprises:
when detecting an input seventh user operation on the first subscreen, determining, by the terminal device, that the first subscreen is in a dragged state; and
switching, by the terminal device, display positions of the first subscreen and the second subscreen when detecting an input operation that is used to drag the first subscreen to an area of the second subscreen.

9. The method according to any one of claims 1 to 7, wherein the method further comprises:
displaying, by the terminal device, a split-screen thumbnail when detecting an input eighth user operation on the preset icon;
when detecting an input seventh user operation on a thumbnail corresponding to the first subscreen in the split-screen thumbnail, determining, by the terminal device, that the first subscreen is in a dragged state; and
switching, by the terminal device, display positions of the first subscreen and the second subscreen when detecting an input operation that is used to drag the thumbnail corresponding to the first subscreen to an area of a thumbnail corresponding to the second subscreen.

10. The method according to any one of claims 1 to 9, wherein the method further comprises:
when detecting an input ninth user operation on the first subscreen, determining, by the terminal device, that the first subscreen is in a dragged state; and
closing, by the terminal device, the first subscreen when detecting an input operation that is used to drag the first subscreen out of the screen.

11. The method according to any one of claims 1 to 8, wherein the method further comprises:
displaying, by the terminal device, a split-screen thumbnail when detecting an input tenth user operation on the preset icon; and
closing, by the terminal device, the first subscreen when detecting an input eleventh user operation on the thumbnail corresponding to the first subscreen in the split-screen thumbnail.

12. A terminal device comprising a touchscreen, a memory, one or more processors, a plurality of applications, and one or more computer programs, wherein the one or more computer programs are stored in the memory, and when the one or more processors execute the one or more computer programs, the terminal device is enabled to implement the method according to any one of claims 1 to 11.

13. A computer storage medium comprising computer instructions, wherein when the computer instructions are run on a terminal device, the terminal device is enabled to perform the method according to any one of claims 1 to 11.

## Patentansprüche

1. Split-Screen-Verarbeitungsverfahren, das umfasst:
Anzeigen (301), durch ein Endgerät, einer ersten Schnittstelle, die ein voreingestelltes Symbol und eine erste Anwendung umfasst, wobei das voreingestellte Symbol schwebend über der ersten Anwendung angezeigt wird; und
Anzeigen (302), durch das Endgerät, einer ersten Anwendungsliste, wenn eine erste Benutzereingabeoperation auf dem voreingestellten Symbol erfasst wird;
Aufteilen (303), durch das Endgerät, eines Bildschirms des Endgeräts in zwei oder mehr Unterbildschirme, wenn eine zweite Benutzereingabeoperation auf einer zweiten Anwendung in der ersten Anwendungsliste erfasst wird; und
Anzeigen, durch das Endgerät, der ersten Anwendung und der zweiten Anwendung auf einem ersten Unterbildschirm beziehungsweise einem zweiten Unterbildschirm, wobei der erste Unterbildschirm und der zweite Unterbildschirm in den zwei oder mehr Unterbildschirmen enthalten sind;
**dadurch gekennzeichnet, dass**
wenn die zweite Benutzereingabeoperation eine Operation eines Berührens und Haltens der zweiten Anwendung in der ersten Anwendungsliste und eines Schiebens der zweiten Anwendung nach links ist, der Bildschirm des Endgeräts in einen linken Unterbildschirm und einen rechten Unterbildschirm unterteilt wird,
der erste Unterbildschirm ein Unterbildschirm aus dem linken Unterbildschirm und dem rechten Unterbildschirm ist und der zweite Unterbildschirm der andere Unterbildschirm aus dem linken Unterbildschirm und dem rechten Unterbildschirm ist, oder wenn die zweite Benutzereingabeoperation eine Operation des Berührens und Haltens der zweiten Anwendung in der ersten Anwendungsliste und des Schiebens der zweiten Anwendung nach oben ist, der Bildschirm des Endgeräts in einen oberen Unterbildschirm und einen unteren Unterbildschirm unterteilt wird,
wobei der erste Unterbildschirm ein Unterbildschirm aus dem oberen Unterbildschirm und dem unteren Unterbildschirm ist und der zweite Unterbildschirm der andere Unterbildschirm aus dem oberen Unterbildschirm und dem unteren Unterbildschirm ist.

2. Verfahren nach Anspruch 1, wobei die erste Anwendungsliste eine oder mehrere umfasst von: einer Anwendung, deren Anzahl der Verwendungen größer als ein erster Schwellenwert ist, einer Anwendung, deren Assoziationsgrad mit einer aktuell angezeigten Anwendung größer als ein dritter Schwellenwert ist, einer Anwendung mit zu verarbeitenden Informationen und einer kürzlich verwendeten Anwendung, wobei ein Zeitunterschied zwischen einem Zeitpunkt der Verwendung der Anwendung und einem aktuellen Zeitpunkt kleiner als ein zweiter Schwellenwert ist.

3. Verfahren nach Anspruch 1 oder 2, wobei die erste Benutzeroperation eine Tippoperation oder eine Doppeltippoperation umfasst.

4. Verfahren nach einem der Ansprüche 1 bis 3, wobei das Verfahren ferner umfasst:
Anzeigen, durch das Endgerät, von auszuwählenden Anwendungen, wenn eine dritte Benutzereingabeoperation auf der ersten Anwendungsliste erfasst wird, wobei die auszuwählenden Anwendungen Anwendungen in den Anwendungen des Endgeräts sind, die von den in der ersten Anwendungsliste enthaltenen Anwendungen unterschiedlich sind;
wenn eine vierte Benutzereingabeoperation auf einer vierten Anwendung erfasst wird, Hinzufügen, durch das Endgerät, der vierten Anwendung zur ersten Anwendungsliste,
um eine zweite Anwendungsliste zu erhalten, wobei die vierte Anwendung eine beliebige der auszuwählenden Anwendungen ist; und
das Erfassen, durch das Endgerät, einer zweiten Benutzereingabeoperation auf einer zweiten Anwendung in der ersten Anwendungsliste umfasst:
Erfassen, durch das Endgerät, der zweiten Benutzereingabeoperation auf der zweiten Anwendung in der zweiten Anwendungsliste.

5. Verfahren nach einem der Ansprüche 1 bis 4, wobei, wenn ein faltbarer Bildschirm auf dem Endgerät angeordnet wird, das Verfahren ferner umfasst:
wenn erfasst wird, dass der faltbare Bildschirm ausgeklappt ist, Anzeigen, durch das Endgerät, der ersten Schnittstelle, die das voreingestellte Symbol umfasst.

6. Verfahren nach einem der Ansprüche 1 bis 5, wobei das Verfahren ferner umfasst:
Ausblenden, durch das Endgerät, des voreingestellten Symbols, wenn innerhalb einer voreingestellten Zeitspanne keine Benutzereingabeoperation auf dem voreingestellten Symbol erfasst wird.

7. Verfahren nach einem der Ansprüche 1 bis 6, wobei das Verfahren ferner umfasst:
Anzeigen, durch das Endgerät, des voreingestellten Symbols, wenn eine fünfte Benutzereingabeoperation erfasst wird.

8. Verfahren nach einem der Ansprüche 1 bis 7, wobei das Verfahren ferner umfasst:
wenn eine siebte Benutzereingabeoperation auf dem ersten Unterbildschirm erfasst wird, Bestimmen, durch das Endgerät, dass sich der erste Unterbildschirm in einem gezogenen Zustand befindet; und
Umschalten, durch das Endgerät, der Anzeigepositionen des ersten Unterbildschirms und des zweiten Unterbildschirms, wenn eine Eingabeoperation erfasst wird, die zum Ziehen des ersten Unterbildschirms in einen Bereich des zweiten Unterbildschirms verwendet wird.

9. Verfahren nach einem der Ansprüche 1 bis 7, wobei das Verfahren ferner umfasst:
Anzeigen, durch das Endgerät, eines Split-Screen-Miniaturbilds, wenn eine achte Benutzereingabeoperation auf dem voreingestellten Symbol erfasst wird;
wenn eine siebte Benutzereingabeoperation auf einem Miniaturbild, das dem ersten Unterbildschirm im Split-Screen-Miniaturbild entspricht, erfasst wird, Bestimmen, durch das Endgerät, dass sich der erste Unterbildschirm in einem gezogenen Zustand befindet; und
Umschalten, durch das Endgerät, der Anzeigepositionen des ersten Unterbildschirms und des zweiten Unterbildschirms, wenn eine Eingabeoperation erfasst wird, die zum Ziehen des Miniaturbilds, das dem ersten Unterbildschirm entspricht, in einen Bereich eines Miniaturbilds verwendet wird, der dem zweiten Unterbildschirm entspricht.

10. Verfahren nach einem der Ansprüche 1 bis 9, wobei das Verfahren ferner umfasst:
wenn eine neunte Benutzereingabeoperation auf dem ersten Unterbildschirm erfasst wird, Bestimmen, durch das Endgerät, dass sich der erste Unterbildschirm in einem gezogenen Zustand befindet; und
Schließen, durch das Endgerät, des ersten Unterbildschirms, wenn eine Eingabeoperation erfasst wird, die zum Ziehen des ersten Unterbildschirms aus dem Bildschirm verwendet wird.

11. Verfahren nach einem der Ansprüche 1 bis 8, wobei das Verfahren ferner umfasst:
Anzeigen, durch das Endgerät, eines Split-Screen-Miniaturbilds, wenn eine zehnte Benutzereingabeoperation auf dem voreingestellten Symbol erfasst wird; und
Schließen, durch das Endgerät, des ersten Unterbildschirms, wenn eine elfte Benutzereingabeoperation auf dem Miniaturbild erfasst wird, das dem ersten Unterbildschirm in dem Split-Screen-Miniaturbild entspricht.

12. Endgerät,
das einen Berührungsbildschirm, einen Speicher, einen oder mehrere Prozessoren, eine Vielzahl von Anwendungen und ein oder mehrere Computerprogramme umfasst, wobei das eine oder die mehreren Computerprogramme in dem Speicher gespeichert sind und, wenn der eine oder die mehreren Prozessoren das eine oder die mehreren Computerprogramme ausführen, das Endgerät aktiviert wird, um das Verfahren nach einem der Ansprüche 1 bis 11 zu implementieren.

13. Computerspeichermedium,
das Computeranweisungen umfasst, wobei, wenn die Computeranweisungen auf einem Endgerät ablaufen gelassen werden, das Endgerät aktiviert wird, um das Verfahren nach einem der Ansprüche 1 bis 11 durchzuführen.

## Revendications

1. Procédé de traitement d'un écran divisé comprenant :
l'affichage (301), par un dispositif terminal, d'une première interface comprenant une icône prédéfinie et une première application, dans lequel l'icône prédéfinie est affichée au-dessus de la première application de manière flottante ; et
l'affichage (302), par le dispositif terminal, d'une première liste d'applications lors de la détection d'une première opération de saisie d'utilisateur sur l'icône prédéfinie ;
la division (303), par le dispositif terminal, d'un écran du dispositif terminal en deux sous-écrans ou plus lors de la détection d'une deuxième opération de saisie d'utilisateur sur une seconde application dans la première liste d'applications ; et
l'affichage, par le dispositif terminal, de la première application et de la seconde application sur un premier sous-écran et un second sous-écran respectivement, dans lequel le premier sous-écran et le second sous-écran font partie des deux sous-écrans ou plus ;
**caractérisé en ce que**
lorsque la deuxième opération de saisie d'utilisateur est une opération consistant à toucher et à maintenir la seconde application dans la première liste d'applications et à déplacer par glissement la seconde application vers la gauche, l'écran du terminal est divisé en un sous-écran gauche et un sous-écran droit,
le premier sous-écran étant un sous-écran parmi le sous-écran gauche et le sous-écran droit
et le second sous-écran étant l'autre sous-écran parmi le sous-écran gauche et le sous-écran droit, ou
lorsque la deuxième opération de saisie d'utilisateur est une opération consistant à toucher et à maintenir la seconde application dans la première liste d'applications et à déplacer par glissement la seconde application vers le haut, l'écran du terminal est divisé en un sous-écran supérieur et un sous-écran inférieur,
le premier sous-écran étant un sous-écran parmi le sous-écran supérieur et le sous-écran inférieur
et le second sous-écran étant l'autre sous-écran parmi le sous-écran supérieur et le sous-écran inférieur.

2. Procédé selon la revendication 1, dans lequel la première liste d'applications
comprend une ou plusieurs d'une application dont la quantité de temps d'utilisation est supérieure à un premier seuil, une application dont le degré d'association avec une application actuellement affichée est supérieur à un troisième seuil, une application contenant des informations à traiter et une application récemment utilisée, dans lequel une différence de temps entre un temps d'utilisation de l'application et un temps actuel est inférieure à un deuxième seuil.

3. Procédé selon la revendication 1 ou 2, dans lequel la première opération de l'utilisateur comprend une opération d'appui ou une opération de double appui.

4. Procédé selon l'une quelconque des revendications 1 à 3, dans lequel le procédé comprend en outre :
l'affichage, par le dispositif terminal, d'applications à sélectionner lors de la détection d'une troisième opération de saisie d'utilisateur sur la première liste d'applications,
dans lequel les applications à sélectionner sont des applications, dans les applications du dispositif terminal, autres que les applications comprises dans la première liste d'applications ;
lors de la détection d'une quatrième opération de saisie d'utilisateur sur une quatrième application, l'ajout, par le dispositif terminal, de la quatrième application à la première liste d'applications pour obtenir une seconde liste d'applications, dans lequel la quatrième application est l'une quelconque des applications à sélectionner ; et
la détection, par le dispositif terminal, d'une deuxième opération de saisie d'utilisateur sur une seconde application dans la première liste d'applications comprend :
la détection, par le dispositif terminal, de la deuxième opération de saisie d'utilisateur sur la seconde application dans la seconde liste d'applications.

5. Procédé selon l'une quelconque des revendications 1 à 4, dans lequel lorsqu'un écran pliable est disposé sur le dispositif terminal, le procédé comprend en outre :
lors de la détection du fait que l'écran pliable est déplié, l'affichage, par le dispositif terminal, de la première interface comprenant l'icône prédéfinie.

6. Procédé selon l'une quelconque des revendications 1 à 5, dans lequel le procédé comprend en outre : le masquage, par le dispositif terminal, de l'icône prédéfinie lorsqu'aucune opération de saisie d'utilisateur sur l'icône prédéfinie n'est détectée au cours d'une période prédéfinie.

7. Procédé selon l'une quelconque des revendications 1 à 6, dans lequel le procédé comprend en outre : l'affichage, par le dispositif terminal, de l'icône prédéfinie lors de la détection d'une cinquième opération de saisie d'utilisateur.

8. Procédé selon l'une quelconque des revendications 1 à 7, dans lequel le procédé comprend en outre :
lors de la détection d'une septième opération de saisie d'utilisateur sur le premier sous-écran, le fait de déterminer, par le dispositif terminal, que le premier sous-écran est dans un état de glissement ; et
la commutation, par le dispositif terminal, des positions d'affichage du premier sous-écran et du second sous-écran lors de la détection d'une opération de saisie utilisée pour faire glisser le premier sous-écran vers une zone du second sous-écran.

9. Procédé selon l'une quelconque des revendications 1 à 7, dans lequel le procédé comprend en outre :
l'affichage, par le dispositif terminal, d'une vignette d'écran divisé lors de la détection d'une huitième opération de saisie d'utilisateur sur l'icône prédéfinie ;
lors de la détection d'une septième opération de saisie d'utilisateur sur une vignette correspondant au premier sous-écran dans la vignette d'écran partagé, le fait de déterminer, par le dispositif terminal, que le premier sous-écran est dans un état de glissement ; et
la commutation, par le dispositif terminal, de positions d'affichage du premier sous-écran et du second sous-écran lors de la détection d'une opération de saisie utilisée pour faire glisser la vignette correspondant au premier sous-écran vers une zone d'une vignette correspondant au second sous-écran.

10. Procédé selon l'une quelconque des revendications 1 à 9, dans lequel le procédé comprend en outre :
lors de la détection d'une neuvième opération de saisie d'utilisateur sur le premier sous-écran, le fait de déterminer, par le dispositif terminal, que le premier sous-écran est dans un état de glissement ; et
la fermeture, par le dispositif terminal, du premier sous-écran lors de la détection d'une opération de saisie utilisée pour faire glisser le premier sous-écran hors de l'écran.

11. Procédé selon l'une quelconque des revendications 1 à 8, dans lequel le procédé comprend en outre :
l'affichage, par le dispositif terminal, d'une vignette d'écran divisé lors de la détection d'une dixième opération de saisie d'utilisateur sur l'icône prédéfinie ; et
la fermeture, par le dispositif terminal, du premier sous-écran lors de la détection d'une onzième opération de saisie d'utilisateur sur la vignette correspondant au premier sous-écran dans la vignette de l'écran partagé.

12. Dispositif terminal
comprenant un écran tactile, une mémoire, un ou plusieurs processeurs, une pluralité d'applications, et un ou plusieurs programmes informatiques, dans lequel le ou les programmes informatiques sont stockés dans la mémoire, et lorsque le ou les processeurs exécutent le ou les programmes informatiques, le dispositif terminal est activé pour mettre en oeuvre le procédé selon l'une quelconque des revendications 1 à 11.

13. Support de stockage informatique
comprenant des instructions informatiques, dans lequel, lorsque les instructions informatiques sont exécutées sur un dispositif terminal, le dispositif terminal est activé pour effectuer le procédé selon l'une quelconque des revendications 1 à 11.
